(19) Europäisches Patentamt / European Patent Office / Office européen des brevets

(11) **EP 4 040 347 A1**

(12) **EUROPEAN PATENT APPLICATION**
published in accordance with Art. 153(4) EPC

(43) Date of publication:
**10.08.2022 Bulletin 2022/32**

(21) Application number: **20945867.8**

(22) Date of filing: **24.11.2020**

(51) International Patent Classification (IPC):
**G06N 20/00** (2019.01)     **G06N 5/02** (2006.01)
**G06T 19/00** (2011.01)     **G06T 19/20** (2011.01)
**G06T 5/00** (2006.01)

(86) International application number:
**PCT/KR2020/016688**

(87) International publication number:
**WO 2022/019389 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.07.2020 KR 20200091753**

(71) Applicant: **Urbanbase Inc.**
**Seoul (KR)**

(72) Inventors:
• **BAEK, Yun Ah**
**Anyang-si Gyeonggi-do 14070 (KR)**
• **KIM, Soo Min**
**Seoul 03916 (KR)**

(74) Representative: **BCKIP**
**Siegfriedstraße 8**
**80803 München (DE)**

(54) **DEVICE AND METHOD FOR LEARNING DATA AUGMENTATION-BASED SPACE ANALYSIS MODEL**

(57) Disclosed is a data augmentation-based space analysis model learning apparatus including one or more processors, wherein the operation performed by the processor includes acquiring a plurality of space images and labeling a class specifying space information corresponding to each of the plurality of space images or acquiring the plurality of space images to which the class is labeled and generating learning data, generating a second space image by changing some or all of pixel information included in a first space image among the plurality of space images and augmenting the learning data, labeling a class labeled to the first space image, to the second space image, and learning a weight of a model designed based on a predetermined image classification algorithm, for deriving a correlation between a space image included in the learning data and a class labeled to each of the space images.

FIG 1

| Space Classification | Object Detection | Preference Analysis | Product Recommendation |
|---|---|---|---|

**Description**

**BACKGROUND OF THE INVENTION**

**Field of the Invention**

The present disclosure relates to a data augmentation-based space analysis model learning apparatus and method.

**Discussion of the Related Art**

According to the Korea Internet & Security Agency (KISA), the size of a domestic online shopping market aggregated in 2019 is about 133 trillion won, showing a growth of about 20% compared to 111 trillion won in 2018. As a growth rate of an online shopping market increases sharply, the number of stores and products registered on an online shopping platform has rapidly increased, and a ratio of consumers purchasing products through online stores rather than offline stores has significantly increased.

In an offline shopping type, consumers select a store and visually check products in a store to purchase the product they like, whereas in an online shopping type, consumers search for and purchase a product through keywords of the product they want. As the platform on which products are sold changes, a form in which consumers find products has also changed.

Accordingly, in online shopping, it has become very important to properly set keywords related to products so that consumer traffic can flow to product pages. However, since it is difficult to set keywords for each product in a situation in which there are more than 400 million products uploaded to the top 10 online shopping malls in Korea, there has been a need for a solution for setting keywords for products only with image files for the products in the online shopping mall.

In this case, elements constituting an image of a product may be broadly divided into a space, an object, an atmosphere, and color. A buyer also considers the use of a space in which a product is used, the product itself, the atmosphere of the space, and the color of the product as important factors when searching for a product, and thus searches for the product by combining keywords of any one of a space, an object, an atmosphere, and color which are the elements constituting the image of the product.

As such, in a situation in which a solution for automatically extracting keywords for a space, an object, an atmosphere, and color from a product image is required, representative technologies that can be introduced include image classification algorithms using artificial intelligence. In order to accurately classify a space, an object, an atmosphere, and color from a product image, there are many factors to consider, such as data quality, data quantity, a labeling method, and ease of learning. Thus, there is a need for a technology for generating a model with accurate performance while generating various learning data and facilitating learning of an artificial intelligence model.

**SUMMARY OF THE INVENTION**

An object of an embodiment of the present disclosure is provided to a technology for generating a model for automatically classifying a class of a space indicated by an image from the corresponding image.

In this case, an image classification artificial intelligence algorithm as a technology used in an embodiment of the present disclosure may cause a large difference in performance the model depending on the amount and quality of learning data used in learning. In particular, in the case of artificial intelligence model learning, in order to make a model having excellent performance only with restrictive learning data, it may be possible to learn the model through learning data including variables of various environments or various situations in which the model is to be actually used. The present disclosure may propose a data augmenting technology for generating learning data including variables of various environments or situations in which the model is to be actually used when generating a model for classifying a space image.

However, the technical problems solved by the embodiments may not be limited to the above technical problems and may be variously expanded without are departing from the spirit and scope of the present disclosure.

In accordance with an aspect of the present disclosure, the above and other objects can be accomplished by the provision of a data augmentation-based space analysis model learning apparatus including one or more memories configured to store instructions for performing a predetermined operation, and one or more processors operatively connected to the one or more memories and configured to execute the instructions, wherein the operation performed by the processor includes acquiring a plurality of space images and labeling a class specifying space information corresponding to each of the plurality of space images or acquiring the plurality of space images to which the class is labeled and generating learning data, generating a second space image by changing some or all of pixel information included in a first space image among the plurality of space images and augmenting the learning data, labeling a class labeled to the first space image, to the second space image, and learning a weight of a model designed based on a predetermined image classification algorithm, for deriving a correlation between a space image included in the learning data and a class labeled to each of the space images, by inputting the augmented learning data to the model to generate a model for determining a space image based on the correlation.

The generating the second space image may include generating the second space image by changing an element value that is greater than a predetermined reference value to a greater element value and changing an element value smaller than the reference value to a smaller element value with respect to an element value (x, y, z) configuring RGB information of the pixel information included in the first space image.

The generating the second space image may include generating the second space image from the first space image based on Equation 1 below:

[Equation 1]

$$dst(I) = round(\max(0, \min(\alpha * src(I) - \beta, 255)))$$

(src(I): element value (x, y, z) before pixel information is changed, $\alpha$: constant, $\beta$: constant, and dst(I): element value (x', y', z') after pixel information is changed).

The generating the second space image may include generating the second space image from the first space image based on Equation 2 below:

[Equation 2]

$$Y = 0.1667 * R + 0.5 * G + 0.3334 * B$$

(R: x of RGB information (x, y, z) of pixel information, G: y of GB information (x, y, z) of pixel information, B: z of GB information (x, y, z) of pixel information, and Y: element value (x', y', z') after pixel information is changed).

The generating the second space image may include generating the second space image from the first space image based on Equations 3 and 4 below:

[Equation 3]

$$dst(I) = round(\max(0, \min(\alpha * src(I) - \beta, 255)))$$

(src(I): element value (x, y, z) before pixel information is changed, $\alpha$: constant, $\beta$: constant, dst(I): element value (x', y', z') after pixel information is changed)

[Equation 4]

$$Y = 0.1667 * R + 0.5 * G + 0.3334 * B$$

(R: x' of (x', y', z') of dst(I) acquired from Equation 4, G: y' of (x', y', z') of dst(I) acquired from Equation 4, B: z' of (x', y', z') of dst(I) acquired from Equation 4, and Y: element value (x'', y'', z'') after pixel information is changed).

The generating the second space image includes generating the second space image by adding noise information to some of pixel information included in the first space image.

The generating the second space image may include generating the second space image by adding noise information to pixel information of the first space image based on Equation 5 below:

[Equation 5]

$$dst(I) = round(\max(0, \min(src(I) \pm N, 255)))$$

(src(I): element value (x, y, z) before pixel information is changed, $N$: random number, dst(I): element value (x', y', z') after pixel information is changed).

The generating the second space image may include generating the second space image by calculating a value ($R_{max}$-$R_{AVG}$,$G_{max}$-$G_{AVG}$,$B_{max}$-$B_{AVG}$) by subtracting an element average value ($R_{AVG}$,$G_{AVG}$,$B_{AVG}$) of each of R, G, and B of a plurality of pixels from a maximum element value ($R_{max}$,$G_{max}$,$B_{max}$) among element values of each of R, G, and B of the plurality of pixels included in a size of an NxN matrix (N being a natural number equal to or greater than 3) including a first pixel at a center among pixels included in the first space image and, when any one of element values of the ($R_{max}$-$R_{AVG}$,$G_{max}$-$G_{AVG}$,$B_{max}$-$B_{AVG}$) is smaller than a preset value, performing an operation of blurring the first pixel.

The generating the second space image may include generating random number information based on standard Gaussian normal distribution with an average value of 0 and a standard deviation of 100 as much as a number of all pixels included in the first space image and generating the second space image into which noise is inserted by adding the random number information to each of the all pixels.

The generating the model may include setting the space image included in the learning data to be input to an input layer of a neural network designed based on a Deep Residual Learning for Image Recognition (ResNet) algorithm, setting a class, labeled to each of the space images, to be input to an output layer, and learning a weight of a neural network for deriving a correlation between the space image included in the learning data and the class labeled to each of the space images.

A number of network layers among hyper parameters of the neural network designed based on the ResNet algorithm may have one value of [18, 34, 50, 101, 152, and 200], a number of classes may include 4 classes classified into a living room/room/kitchen/bathroom, a size of mini batch has one value of [32, 64, 128, and 256], a learning number of times may have one of 10 to 15, a learning rate is set to 0.005 or 0.01, and a loss function is set to SGD or Adam.

In accordance with another aspect of the present disclosure, a method performed by a data augmentation-based space analysis model learning apparatus includes acquiring a plurality of space images and labeling a class specifying space information corresponding to each of the plurality of space images or acquiring the plurality of space images to which the class is labeled and generating learning data, generating a second space image by changing some or all of pixel information included in a first space image among the plurality of space images and augmenting the learning data, labeling a class labeled to the first space image, to the second space image, and learning a weight of a model designed based on a predetermined image classification algorithm, for deriving a correlation between a space image included in learning data and a class labeled to each of the space images, by inputting the augmented learning data to the model to generate a model for determining a space image based on the correlation.

**BRIEF DESCRIPTION OF THE DRAWINGS**

The accompanying drawings, which are included to provide a further understanding of the present disclosure and are incorporated in and constitute a part of this application, illustrate embodiment(s) of the present disclosure and together with the description serve to explain the principle of the present disclosure. In the drawings:

FIG. 1 is a diagram showing a function of classifying a class of a space represented by an image using an artificial intelligence model generated by a data augmentation-based space analysis model learning apparatus according to an embodiment of the present disclosure;
FIG. 2 is a functional block diagram of a data augmentation-based space analysis model learning apparatus according to an embodiment of the present disclosure;
FIG. 3 is an example diagram of a second space image generated by augmenting data by changing pixel information included in a first space image according to an embodiment;
FIG. 4A is an example diagram of a second space image generated by augmenting data by applying a gray scale to pixel information included in a first space image according to an embodiment;
FIG. 4B is an example diagram of a second space image generated by augmenting data by adding noise to some of pixel information included in a first space image according to an embodiment;
FIG. 5 is an example diagram for explaining a method of generating a second space image by identifying an edge region of an object included in a first space image and applying blur to a region that is not an edge;
FIG. 6 is an example diagram of a second space image generated by augmenting data by adding noise information based on the Gaussian normal distribution to a first space image according to an embodiment; and
FIG. 7 is a flowchart of a data augmentation-based space analysis model learning method according to an embodiment of the present disclosure.

## DETAILED DESCRIPTION OF THE INVENTION

The attached drawings for illustrating exemplary embodiments of the present disclosure are referred to in order to gain a sufficient understanding of the present disclosure, the merits thereof, and the objectives accomplished by the implementation of the present disclosure. The present disclosure may, however, be embodied in many different forms and should not be construed as being limited to the embodiments set forth herein; rather, these embodiments are provided so that this disclosure will be thorough and complete, and will fully convey the concept of the present disclosure to one of ordinary skill in the art. Meanwhile, the terminology used herein is for the purpose of describing particular embodiments and is not intended to limit the present disclosure.

In the following description of the present disclosure, a detailed description of known functions and configurations incorporated herein will be omitted when it may make the subject matter of the present disclosure unclear. The terms used in the specification are defined in consideration of functions used in the present disclosure, and can be changed according to the intent or conventionally used methods of clients, operators, and users. Accordingly, definitions of the terms should be understood on the basis of the entire description of the present specification.

The functional blocks shown in the drawings and described below are merely examples of possible implementations. Other functional blocks may be used in other implementations without departing from the spirit and scope of the detailed description. In addition, although one or more functional blocks of the present disclosure are represented as separate blocks, one or more of the functional blocks of the present disclosure may be combinations of various hardware and software configurations that perform the same function.

The expression that includes certain components is an open-type expression and merely refers to existence of the corresponding components, and should not be understood as excluding additional components.

It will be understood that when an element is referred to as being "on", "connected to" or "coupled to" another element, it may be directly on, connected or coupled to the other element or intervening elements may be present.

Expressions such as 'first, second', etc. are used only for distinguishing a plurality of components, and do not limit the order or other characteristics between the components.

Hereinafter, embodiments of the present disclosure will be described with reference to the accompanying drawings.

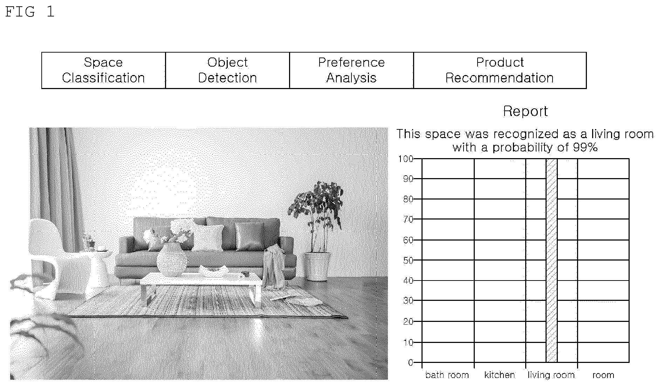

FIG. 1 is a diagram showing a function of classifying a class of a space represented by an image using an artificial intelligence model generated by a data augmentation-based space analysis model learning apparatus 100 according to an embodiment of the present disclosure.

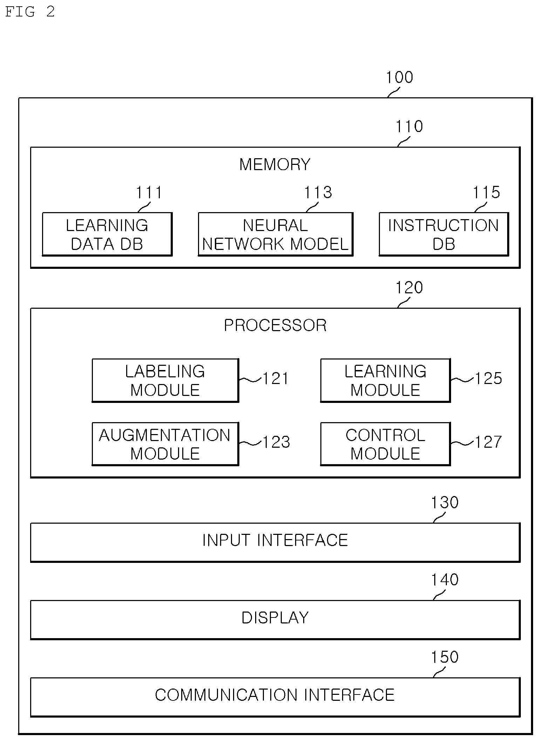

Referring to FIG. 1, the data augmentation-based space analysis model learning apparatus 100 according to an embodiment of the present disclosure may provide a space classification function among space classification, object detection, preference analysis, and product recommendation functions of an upper menu of an interface shown in FIG. 1. The data augmentation-based space analysis model learning apparatus 100 may generate an artificial intelligence model used in an interface of FIG. 1. The artificial intelligence model may analyze a space image input to lower-left side of FIG. 1 to determine a class indicating a name, use, or characteristic of the space image (e.g., living room: 99%). In order to implement an embodiment, components of the data augmentation-based space analysis model learning apparatus 100 will be described with reference to FIG. 2.

FIG. 2 is a functional block diagram of the data augmentation-based space analysis model learning apparatus 100 according to an embodiment of the present disclosure.

Referring to FIG. 2, the data augmentation-based space analysis model learning apparatus 100 according to an embodiment may include a memory 110, a processor 120, an input interface 130, a display 140, and a communication interface 150.

The memory 110 may include a learning data database (DB) 111, a neural network model 113, and an instruction DB 115.

The learning data DB 111 may include a space image file formed by photographing a specific space such as an indoor space or an outdoor space. The space image may be acquired through an external server or an external DB or may be acquired on the Internet. In this case, the space image may include a plurality of pixels (e.g., M*N pixels in the form of M horizontal and N vertical matrices), and each pixel may include pixel information configured with RGB element values (x, y, z) representing unique colors of red (R), green (G), and blue (B).

The neural network model 113 may be an artificial intelligence model learned based on an image classification artificial intelligence algorithm for determining a class that specifies a space used for which name, use, and characteristics of a space image by analyzing an input space image. The artificial intelligence model may be generated by an operation of the processor 120 to be described and may be stored in the memory 110.

The instruction DB 115 may store instructions for performing an operation of the processor 120. For example, the instruction DB 115 may store a computer code for performing operations corresponding to operations of the processor 120, which will be described below.

The processor 120 may control the overall operation of the components of the data augmentation-based space analysis model learning apparatus 100, that is, the memory 110, the input interface 130, the display 140, and the communication interface 150. The processor 120 may include a labeling module 121, an augmentation module 123, a learning module 125, and a control module 127. The processor 120 may execute the instructions stored in the memory 110 to drive the labeling module 121, the augmentation module 123, the learning module 125, and the control module 127, and operations performed by the labeling module 121, the augmentation module 123, the learning module 125, and the control module 127 may be understood to be operations performed by the processor 120.

The labeling module 121 may generate learning data used in learning of an artificial intelligence model by labeling (mapping) a class specifying space information (e.g., a space name, space use, and the characteristic of the use) represented by each of a plurality of space images and may store the learning data in the learning data DB 111. The labeling module 121 may acquire a space image through an external server or an external DB or may acquire a space image on the Internet. A class (e.g., a room, a bathroom, a kitchen, or a living room) specifying space information of a corresponding image may be pre-labeled to the space image.

The augmentation module 123 may generate a space image (a space image that is transformed by the augmentation module will be referred to as a "second space image") formed by changing some or all of pixel information contained in the space image (a space image that is not transformed by the augmentation module will be referred to as a "first space image") stored in the learning data DB 111 to augment the learning data and may add and store the second space image in the learning data DB 111.

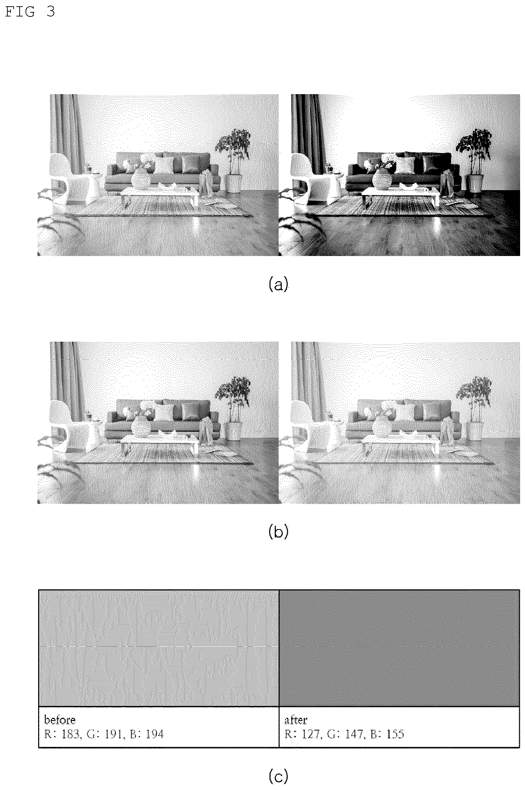

A model learned by the data augmentation-based space analysis model learning apparatus 100 according to an embodiment of the present disclosure may have a function of classifying a class of a space image. In this case, even if the space image is captured by photographing the same space, information contained in an image file may be changed by various variables due to various environments or situations in which the space image is actually generated, such as the characteristics of a camera used for photograph, a time at which photograph is performed, or a habit of a person who takes a picture. Thus, in order to improve performance of the artificial intelligence model, the amount and quality of data used for learning may be important. In particular, in order to learn variables to be generated according to the characteristics of a camera used for photograph, a time at which photograph is performed, or a habit of a person who takes a picture, the augmentation module 123 may increase the quantity of learning data through a data augmentation algorithm of FIGS. 3 to 6, which applies a variable to be actually generated with respect to one space image. In this case, the labeling module 121 may label a class labeled to the first space image to the second space image with respect to the second space image that is newly generated prior to labeling, and thus may automate a labeling process for augmented learning data to reduce a labeling time.

The learning module 125 may learn a weight of a model designed based on a predetermined image classification algorithm, for deriving a correlation between a space image included in learning data and a class labeled to each of the space images, by inputting augmented learning data to the model, and thus may generate an artificial intelligence model for determining a class for a space image that is newly input based on the correlation of the weight. For example, the learning module 125 may generate a neural network by setting the space image included in the learning data to be input to an input layer of a neural network designed based on a Deep Residual Learning for Image Recognition (ResNet) algorithm among image classification algorithms, setting a class to which a space image is labeled to be output to an output layer, and learning a weight of a neural network for deriving a correlation between the space image included in the learning data and the class labeled to each space image.

The control module 127 may input a space image to the completely learned artificial intelligence model to derive a class that is determined by the artificial intelligence model as a keyword of the class as a keyword. Thus, the control module 127 may store keywords in a product DB of an online shopping mall server to use corresponding keyword information on a product page including the space image.

The input interface 130 may receive user input. For example, when a class for learning data is labeled, the input interface 130 may receive user input.

The display 140 may include a hardware component that includes a display panel to output an image.

The communication interface 150 may communicate with an external device (e.g., an online shopping mall server or a user equipment) to transmit and receive information. To this end, the communication interface 150 may include a wireless communication module or a wired communication module.

Hereinafter, various embodiments of components of the data augmentation-based space analysis model learning apparatus 100 will be described with reference to FIGS. 3 to 6.

FIG. 3 is an example diagram of a second space image generated by augmenting data by changing pixel information included in a first space image according to an embodiment.

The augmentation module 123 may perform transformation to increase contrast by making a bright part of pixels of the first space image brighter and making a dark part darker or to reduce contrast by making the bright part less bright and making the dark part less dark, and thus may generate a second space image for learning a variable for generating different images of one space depending on the performance or model of a camera.

To this end, the augmentation module 123 may generate the second space image by changing an element value that is greater than a predetermined reference value to a greater element value and changing an element value smaller than the reference value to a smaller element value with respect to the element value (x, y, z) configuring RGB information of the pixel information included in the first space image.

For example, the augmentation module 123 may generate the second space image, pixel information of which is changed by applying Equation 1 below, with respect to pixel information of all pixels of the first space image.

[Equation 1]

$$dst(I) = round(\max(0, \min(\alpha * src(I) - \beta, 255)))$$

(src(I): element value (x, y, z) before pixel information is changed, $\alpha$: constant, $\beta$: constant, and dst(I): element value (x', y', z') after pixel information is changed)

According to Equation 1 above, when $\alpha$ is set to have a greater value than 1, contrast may be increased by making a bright part of pixels of the first space image brighter and making a dark part darker among pixels in the first space image, and when $\alpha$ is set to have a value greater than 0 and smaller than 1, contrast may be reduced by making the bright part less bright and making the dark part less dark among the pixels in the first space image.

Since an element value of R, G, and B generally has a value between 0 and 255, $\beta$ may be set to prevent the element value output based on $\alpha$ from being excessively greater than 255 and may be set to prevent the maximum value from being greater than 255 using a min function.

Since an element value of R, G, and B generally has a value between 0 and 255, a max function may be used to prevent the element value based on $\beta$ from being smaller than 0 using the max function.

When $\alpha$ is set to a value having a decimal point, a round function may be used in such a way that the element value of the changed pixel information becomes an integer.

Referring to FIG. 3A, a left side shows the first space image, and the right side shows the second space image when Equation 1 is applied with settings of $\alpha$:**2.5**,$\beta$:**330.** As seen from the second space image of the right side of FIG. 3A, new learning data with increased contrast may be generated by changing a bright part to be brighter and changing a dark part to be darker, compared with the first space image.

Referring to FIG. 3B, a left side shows the first space image, and the right side shows the second space image when Equation 1 is applied with settings of $\alpha$:**0.8**,$\beta$:**50**. As seen from the second space image of the right side of FIG. 3B, new learning data with reduced contrast may be generated by changing a bright part to be less bright and changing a dark part to be less dark, compared with the first space image.

Referring to FIG. 3C, a left side shows the first space image formed with one color (R, G, B) = (183, 191, 194), and the right side shows the second space image when Equation 1 is applied with settings of $\alpha$:**2.5**,$\beta$:**330** . A degree by which information on one pixel changes based on Equation 1 may be seen from FIG. 3C.

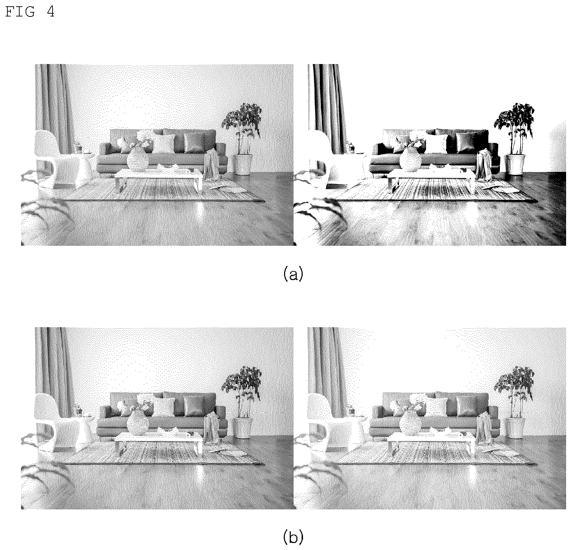

FIG. 4A is an example diagram of a second space image generated by augmenting data by applying a gray scale to pixel information included in a first space image according to an embodiment.

Since determination of a class of a space image is largely affected by arrangement of objects or patterns of the objects, the augmentation module 123 may convert colors to monotonous color and then may generate learning data to which a variable is applied to appropriately learn the arrangement of the objects and the patterns of the objects.

To this end, as shown in a left image of FIG. 4A, the augmentation module 123 may generate the second space image in which the arrangement and the pattern are revealed while pixel information has a monotonous color by applying Equation 2 below for entire pixel information of the first space image.

[Equation 2]

$$Y = 0.1667 * R + 0.5 * G + 0.3334 * B$$

(R: x of RGB information (x, y, z) of pixel information, G: y of GB information (x, y, z) of pixel information, B: z of GB information (x, y, z) of pixel information, and Y: element value (x', y', z') after pixel information is changed)

In addition, as shown in a right image of FIG. 4A, the augmentation module 123 may generate the second space image in which the arrangement and pattern of objects included in the first space image are clearly revealed by applying Equation 4 below to a derived element value after increasing contrast of the first space image through Equation

3 below.

[Equation 3]

$$dst(I)=round(\max(0,\min(\alpha * src(I)-\beta,255)))$$

(src(I): element value (x, y, z) before pixel information is changed, α: constant, β : constant, dst(I): element value (x', y', z') after pixel information is changed)

[Equation 4]

$$Y=0.1667 * R+0.5 * G+0.3334 * B$$

(R: x' of (x', y', z') of dst(I) acquired from Equation 3, G: y' of (x', y', z') of dst(I) acquired from Equation 3, B: z' of (x', y', z') of dst(I) acquired from Equation 3, and Y: element value (x", y", z") after pixel information is changed)

FIG. 4B is an example diagram of a second space image generated by augmenting data by adding noise to some of pixel information included in a first space image according to an embodiment.

The augmentation module 123 may generate learning data for learning the case in which noise is generated in an image captured based on enlargement of a camera. To this end, the augmentation module 123 may add noise information to some of the pixel information included in the first space image to generate the second space image. For example, the augmentation module 123 may generate the second space image to which noise information is added by generating arbitrary coordinate information through an algorithm for generating a random number, selecting some coordinates of pixels included in the first space image, and adding the random number, calculated using the algorithm for generating a random number, to the pixel information based on Equation 5 with respect to an element value of a pixel of the selected coordinates.

[Equation 5]

$$dst(I)=round(\max(0,\min(src(I)\pm N,255)))$$

(src(I): element value (x, y, z) before pixel information is changed, N: random number, dst(I): element value (x', y', z') after pixel information is changed)

As seen from FIG. 4B, a left side shows a first space image, and a right side shows a second space image when noise is added based on Equation 5.

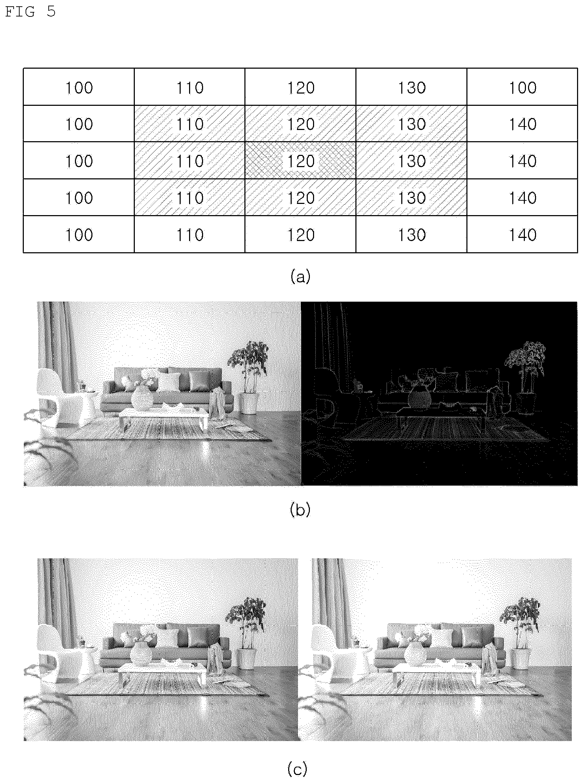

FIG. 5 is an example diagram for explaining a method of generating a second space image by identifying an edge region of an object included in a first space image and applying blur to a region that is not an edge.

The augmentation module 123 may generate the second space image in which the edge of the object seems to be blurred to learn an image captured when a camera is not in focus according to the following embodiment.

FIG. 5A illustrates an example in which each pixel area is identified assuming a first space image including 25 pixels in the form of a matrix of 5 horizontal lines x 5 vertical lines for convenience of explanation. In this case, each pixel has element values of R, G, and B, but an embodiment will be described based on an element value of R (Red). A number denoted in each pixel region of FIG. 5A may refer to an element value of R.

In FIG. 5A, an operation described below may be performed on all pixels, but for convenience of description, the operation will be described based on a pixel at the center. In FIG. 5A, the augmentation module 123 may identify an edge of an object included in the first space image as shown in the right side of FIG. 5B by calculating a difference (R_max - R_avg = 10) between a maximum value (R_max = 130) of an R element value and an average value (R_avg = 120) of the R element value among pixels included in an NxN region (in FIG. 5A, N is assumed to be 3) centered on the pixel on which the operation is performed and distinguish between a pixel (which is determined as a pixel present in a region inside an object), a derived value of which is smaller than a preset value n, and a pixel (which is determined as a pixel present in an edge region of the object), a derived value of which is greater than a preset value n. Here, the augmentation module 123 may generate an image shown in a right side of FIG. 5C by applying the Gaussian blur algorithm to only a pixel of a region except for the edge region. When there is a region (e.g., an edge of an image) without a pixel in an NxN region based on a pixel on which the operation is performed, the aforementioned operation may be omitted, and the corresponding pixel may be blurred.

As such, the augmentation module 123 may perform the above operation on each of all pixels included in the first space image. In the case of the pixel on which the operation is performed, the second space image may be generated by selecting a plurality of pixels included in the size of an NxN (N is an odd number of 3 or more) matrix including the corresponding pixel in the center as the kernel region, calculating a value ($R_{max}$-$R_{AVG}$,$G_{max}$-$G_{AVG}$,$B_{max}$-$B_{AVG}$) by subtracting an element average value ($R_{AVG}$,$G_{AVG}$,$B_{AVG}$) of each of R, G, and B of a plurality of pixels included in the kernel region from the maximum element value ($R_{max}$,$G_{max}$,$B_{max}$) among element values of each of R, G, and B of the plurality of pixels included in the kernel region, and applying the Gaussian blur algorithm to the corresponding pixel when at least one element value of ($R_{max}$-$R_{AVG}$,$G_{max}$-$G_{AVG}$,$B_{max}$-$B_{AVG}$) is smaller than a preset value n.

When the operation is performed on all pixels included in the first space image, only pixels of the edge region with a large color difference may have pixel information without change, the pixels in the region without color difference may be blurred, and thus the second space image based on which an image captured while the camera is out of focus may be generated. In this case, the Gaussian blur algorithm may be applied for blur processing, but the present disclosure is not limited thereto, and various blur filters may be used.

Referring to FIG. 5B, a left side shows a first space image, and a right side shows an image generated by distinguishing between a pixel having a derived value greater than a preset value n and a pixel having a derived value smaller than n in the embodiment described in FIG. 5. An edge of an object is also clearly revealed in the right image of FIG. 5B, and thus learning data may be added and used to clearly recognize the arrangement and patterns of the object.

Referring to FIG. 5C, a left side shows a first space image, and a right side shows a second space image in which a region except for an edge is blurred in an embodiment formed by applying N = 7 and n = 20 to the aforementioned embodiment of FIG. 5.

In the embodiment described with reference to FIG. 5, the second space image for achieving an opposite effect to the aforementioned embodiment by blurring a pixel having a derived value greater than a preset value n may also be applied to the learning data DB 111.

In the embodiment described with reference to FIG. 5, the second space image for achieving an opposite effect to the aforementioned embodiment by blurring a pixel having a derived value greater than a preset value n may also be applied to the learning data DB 111.

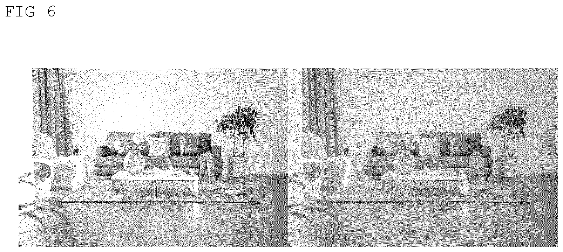

FIG. 6 is an example diagram of a second space image generated by augmenting data by adding noise information based on the Gaussian normal distribution to a first space image according to an embodiment.

The augmentation module 123 may generate learning data for learning the case in which a specific part of an image is out of focus. To this end, the augmentation module 123 may generate random number information based on the standard Gaussian normal distribution with an average value of 0 and a standard deviation of 100 as much as the number of all pixels included in the first space image and may generate the second space image into which noise information is inserted by adding random number information to each of the all pixels.

With respect to the second spatial data generated in FIGS. 3 to 6, the labeling module 121 may reduce a labeling time by automating a labeling process for augmented learning data by labeling a class, labeled to the first space image as an original image before transformation, to the second space image after transformation in the same way.

Then, the learning module 125 may input the original learning data (the first space image) and the augmented learning data (the second space image) in the embodiments of FIGS. 3 to 6 to a model designed based on the image classification algorithm and may learn a weight of a model for deriving a correlation between a space image included in learning data and a class labeled to the space image, and thus may generate a model for determining a class for a space image based on the correlation.

The image classification algorithm may include a machine learning algorithm for defining various problems in an artificial intelligence field and overcoming the problems. According to an embodiment of the present disclosure, learning may proceed through the artificial intelligence model designed using an algorithm of ResNet, LeNet-5, AlexNet, VGG-F, VGG-M, VGG-S, VGG-16, VGG-19, GoogLeNet (inception v1), and SENet.

The artificial intelligence model may refer to the overall model having problem-solving ability, which is composed of nodes that form a network by combining synapses. The artificial intelligence model may be defined based on a learning process for updating a model parameter as a weight between layers configuring the model and an activation function for generating an output value.

The model parameter may refer to a parameter determined through learning and may include a weight of layer connection and bias of neurons. A hyper parameter may refer to a parameter to be set before learning in a machine learning algorithm and may include the number of network layers (num_layer), the number of learning data (num_training_samples), the number of classes (num_classes), a learning rate, a learning number of times (epochs), the size of mini batch (mini_batch_size), and a loss function (optimizer).

The hyper parameter of the artificial intelligence model according to an embodiment of the present disclosure may have the following setting value. For example, the number of network layers may be selected among [18, 34, 50, 101, 152, and 200] in the case of learning data with a large image. In this case, the number of network layers may be learned as an initial value of 18 in consideration of a learning time, and may be changed to 34 after a predetermined number of learning data is learned, thereby improving accuracy. The number of learning data may be a value obtained by subtracting the number of evaluation data from the total image data, 63,806 pieces of learning data may be used among total 79,756 pieces, and the remaining 16,625 pieces may be used as evaluation data. The number of classes may include 7 classes classified into living room/room/kitchen/bathroom. Since the size of mini batch is different in a convergence speed and a final loss value depending on a size value, [32, 64, 128, 256] may be attempted to be used as the size to select an appropriate value, and a size of 128 or 256 may be set. The learning number of times may be set to any one of 10 to 15. The learning rate may be set to 0.005 or 0.01. The loss function (objective function) may be set to a SGD as a default value or may be set to Adam appropriate for image classification. However, the aforementioned values may be merely exemplary, and embodiments are not limited to the above numerals.

The learning objective of the artificial intelligence model may be seen as determining the model parameter for minimizing the loss function. The loss function may be used as an index to determine the optimal model parameters in a learning process of the artificial intelligence models.

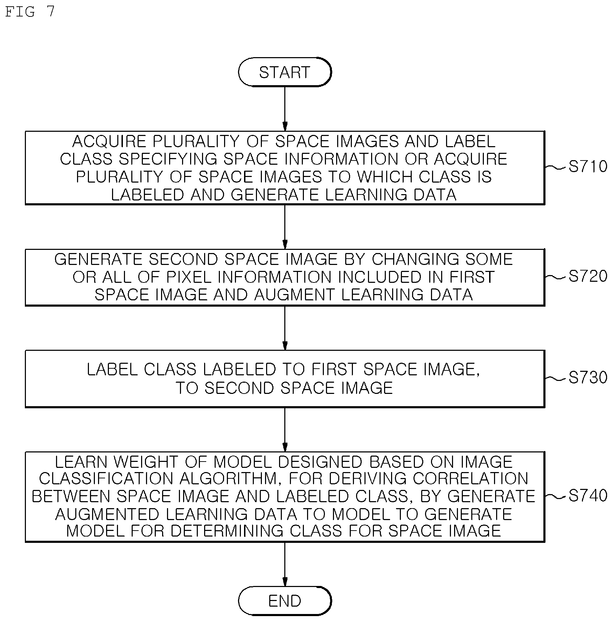

FIG. 7 is a flowchart of a data augmentation-based space analysis model learning method according to an embodiment of the present disclosure. Operations of the data augmentation-based space analysis model learning method of FIG. 7 may be performed by the data augmentation-based space analysis model learning apparatus 100 described with reference to FIG. 2 and will now be described below.

First, the labeling module 121 may acquire a plurality of space images and may label a class for specifying space information corresponding to each of the plurality of space images or may acquire a plurality of space images to which classes are labeled to generate learning data (S710). Then, the augmentation module 123 may augment learning data by generating the second space image obtained by changing some or all of pixel information included in the first space image among the plurality of space images (S720) . Then, the labeling module 121 may label to the class labeled to the first space image, to the second space image (S730). Thus, the learning module 125 may learn a weight of a model for deriving a correlation between a space image included in learning data and a class labeled to each space image by inputting augmented learning data to a model designed based on a predetermined image classification algorithm, and thus may generate a model for determining a space image based on the correlation (S740).

Since the procedure for performing corresponding operations by components as subjects of the respective operations described above has been described above with reference to FIGS. 2 to 6, a repeated description will be omitted.

An embodiment of the present disclosure may provide an image classification model for ensuring high-quality learning data while increasing the amount of learning data through a data augmentation technology for ensuring various learning data by transforming original learning data to learn a variable indicating that a generated image is changed depending on various environments or situations such as the characteristics of a photographing camera, a photographing time, and a habit of a photographing person even if the same space is photographed and for easy learning and improved performance via automation of labeling of augmented learning data.

When the image classification model is used, an online shopping mall may effectively introduce traffic of consumers to a product page using a keyword related to a product only with an image of the product, and the consumers may also search for a keyword required therefor and may use the keyword in search using a wanted image.

Various effects that are directly or indirectly identified through the present disclosure may be provided.

The embodiments of the present disclosure may be achieved by various means, for example, hardware, firmware, software, or a combination thereof.

In a hardware configuration, an embodiment of the present disclosure may be achieved by one or more application specific integrated circuits (ASICs), digital signal processors (DSPs), digital signal processing devices (DSDPs), programmable logic devices (PLDs), field programmable gate arrays (FPGAs), processors, controllers, microcontrollers, microprocessors, etc.

In a firmware or software configuration, an embodiment of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

Combinations of blocks in the block diagram attached to the present disclosure and combinations of operations in the flowchart attached to the present disclosure may be performed by computer program instructions. These computer program instructions may be installed in an encoding processor of a general purpose computer, a special purpose computer, or other programmable data processing equipment, and thus the instructions executed by an encoding processor of a computer or other programmable data processing equipment may create means for perform the functions described in the blocks of the block diagram or the operations of the flowchart. These computer program instructions may also be stored in a computer-usable or computer-readable memory that may direct a computer or other programmable data processing equipment to implement a function in a particular method, and thus the instructions stored in the computer-usable or computer-readable memory may produce an article of manufacture containing instruction means for performing the functions of the blocks of the block diagram or the operations of the flowchart. The computer program instructions may also be mounted on a computer or other programmable data processing equipment, and thus a series of operations may be performed on the computer or other programmable data processing equipment to create a computer-executed process, and it may be possible that the computer program instructions provide the blocks of the block diagram and the operations for performing the functions described in the operations of the flowchart.

Each block or each step may represent a module, a segment, or a portion of code that includes one or more executable instructions for executing a specified logical function. It should also be noted that it is also possible for functions described in the blocks or the operations to be out of order in some alternative embodiments. For example, it is possible that two consecutively shown blocks or operations may be performed substantially and simultaneously, or that the blocks or the operations may sometimes be performed in the reverse order according to the corresponding function.

As such, those skilled in the art to which the present disclosure pertains will understand that the present disclosure may be embodied in other specific forms without changing the technical spirit or essential characteristics thereof. Therefore, it should be understood that the embodiments described above are illustrative in all respects and not restrictive. The scope of the present disclosure is defined by the following claims rather than the detailed description, and all changes or modifications derived from the meaning and scope of the claims and their equivalent concepts should be construed as being included in the scope of the present disclosure.

**Claims**

1.  A data augmentation-based space analysis model learning apparatus comprising:

    one or more memories configured to store instructions for performing a predetermined operation; and
    one or more processors operatively connected to the one or more memories and configured to execute the instructions,
    wherein the operation performed by the processor includes:

        acquiring a plurality of space images and labeling a class specifying space information corresponding to each of the plurality of space images or acquiring the plurality of space images to which the class is labeled and generating learning data;
        generating a second space image by changing some or all of pixel information included in a first space image among the plurality of space images and augmenting the learning data;
        labeling a class labeled to the first space image, to the second space image; and
        learning a weight of a model designed based on a predetermined image classification algorithm, for deriving a correlation between a space image included in the learning data and a class labeled to each of the space images, by inputting the augmented learning data to the model to generate a model for determining a space image based on the correlation.

2.  The data augmentation-based space analysis model learning apparatus of claim 1, wherein the generating the second space image includes generating the second space image by changing an element value that is greater than a predetermined reference value to a greater element value and changing an element value smaller than the reference value to a smaller element value with respect to an element value (x, y, z) configuring RGB information of the pixel information included in the first space image.

3.  The data augmentation-based space analysis model learning apparatus of claim 2, wherein the generating the second space image includes generating the second space image from the first space image based on Equation 1 below:

[Equation 1]

$$dst(I) = round(\max(0, \min(\alpha * src(I) - \beta, 255)))$$

(src(I): element value (x, y, z) before pixel information is changed, $\alpha$ : constant, $\beta$ : constant, and dst(I): element value (x', y', z') after pixel information is changed).

4. The data augmentation-based space analysis model learning apparatus of claim 1, wherein the generating the second space image includes generating the second space image from the first space image based on Equation 2 below:

[Equation 2]

$$Y = 0.1667*R + 0.5*G + 0.3334*B$$

(R: x of RGB information (x, y, z) of pixel information, G: y of GB information (x, y, z) of pixel information, B: z of GB information (x, y, z) of pixel information, and Y: element value (x', y', z') after pixel information is changed).

5. The data augmentation-based space analysis model learning apparatus of claim 1, wherein the generating the second space image includes generating the second space image from the first space image based on Equations 3 and 4 below:

[Equation 3]

$$dst(I) = round(\max(0, \min(\alpha * src(I) - \beta, 255)))$$

(src(I): element value (x, y, z) before pixel information is changed, $\alpha$: constant, $\beta$: constant, dst(I): element value (x', y', z') after pixel information is changed)

[Equation 4]

$$Y = 0.1667*R + 0.5*G + 0.3334*B$$

(R: x' of (x', y', z') of dst(I) acquired from Equation 4, G: y' of (x', y', z') of dst(I) acquired from Equation 4, B: z' of (x', y', z') of dst(I) acquired from Equation 4, and Y: element value (x", y", z") after pixel information is changed).

6. The data augmentation-based space analysis model learning apparatus of claim 1, wherein the generating the second space image includes generating the second space image by adding noise information to some of pixel information included in the first space image.

7. The data augmentation-based space analysis model learning apparatus of claim 6, wherein the generating the second space image includes generating the second space image by adding noise information to pixel information of the first space image based on Equation 5 below:

[Equation 5]

$$dst(I) = round(\max(0, \min(src(I) \pm N, 255)))$$

(src(I): element value (x, y, z) before pixel information is changed, *N*: random number, dst(I): element value (x', y', z') after pixel information is changed).

8. The data augmentation-based space analysis model learning apparatus of claim 1, wherein the generating the second space image includes generating the second space image by calculating a value $(R_{max}-R_{AVG}, G_{max}-G_{AVG}, B_{max}-B_{AVG})$ by subtracting an element average value $(R_{AVG}, G_{AVG}, B_{AVG})$ of each of R, G, and B of a plurality of pixels from a maximum element value $(R_{max}, G_{max}, B_{max})$ among element values of each of R, G, and B of the plurality of pixels included in a size of an NxN matrix (N being a natural number equal to or greater than 3) including a first pixel at a center among pixels included in the first space image and, when any one of element values of the $(R_{max}-R_{AVG}, G_{max}-G_{AVG}, B_{max}-B_{AVG})$ is smaller than a preset value, performing an operation of blurring the first pixel.

9. The data augmentation-based space analysis model learning apparatus of claim 1, wherein the generating the second space image includes generating random number information based on standard Gaussian normal distribution with an average value of 0 and a standard deviation of 100 as much as a number of all pixels included in the first space image and generating the second space image into which noise is inserted by adding the random number information to each of the all pixels.

10. The data augmentation-based space analysis model learning apparatus of claim 1, wherein the generating the model includes setting the space image included in the learning data to be input to an input layer of a neural network designed based on a Deep Residual Learning for Image Recognition (ResNet) algorithm, setting a class, labeled to each of the space images, to be input to an output layer, and learning a weight of a neural network for deriving a correlation between the space image included in the learning data and the class labeled to each of the space images.

11. The data augmentation-based space analysis model learning apparatus of claim 10, wherein a number of network layers among hyper parameters of the neural network designed based on the ResNet algorithm has one value of [18, 34, 50, 101, 152, and 200], a number of classes includes 4 classes classified into a living room/room/kitchen/bathroom, a size of mini batch has one value of [32, 64, 128, and 256], a learning number of times has one of 10 to 15, a learning rate is set to 0.005 or 0.01, and a loss function is set to SGD or Adam.

12. An apparatus including an augmentation-based space analysis model generated by the apparatus of any one of claims 1 to 11.

13. A method performed by a data augmentation-based space analysis model learning apparatus, the method comprising:

acquiring a plurality of space images and labeling a class specifying space information corresponding to each of the plurality of space images or acquiring the plurality of space images to which the class is labeled and generating learning data;
generating a second space image by changing some or all of pixel information included in a first space image among the plurality of space images and augmenting the learning data;
labeling a class labeled to the first space image, to the second space image; and
learning a weight of a model designed based on a predetermined image classification algorithm, for deriving a correlation between a space image included in learning data and a class labeled to each of the space images, by inputting the augmented learning data to the model to generate a model for determining a space image based on the correlation.

14. A computer program recorded in a computer-readable recording medium for performing the method of claim 13 by a processor.

FIG 1

| Space Classification | Object Detection | Preference Analysis | Product Recommendation |
|---|---|---|---|

Report

This space was recognized as a living room with a probability of 99%

FIG 2

```
                                            100

                                            110
   ┌──────────────────────────────────────────────┐
   │                   MEMORY                       │
   │   111            113              115          │
   │ ┌──────────┐  ┌────────────┐  ┌────────────┐   │
   │ │ LEARNING │  │   NEURAL   │  │INSTRUCTION │   │
   │ │ DATA DB  │  │NETWORK MODEL│ │    DB      │   │
   │ └──────────┘  └────────────┘  └────────────┘   │
   └──────────────────────────────────────────────┘

                                            120
   ┌──────────────────────────────────────────────┐
   │                  PROCESSOR                     │
   │ ┌──────────┐          ┌──────────┐             │
   │ │ LABELING │ ~121     │ LEARNING │ ~125        │
   │ │ MODULE   │          │ MODULE   │             │
   │ └──────────┘          └──────────┘             │
   │ ┌──────────┐          ┌──────────┐             │
   │ │AUGMENTATION│~123    │ CONTROL  │ ~127        │
   │ │ MODULE   │          │ MODULE   │             │
   │ └──────────┘          └──────────┘             │
   └──────────────────────────────────────────────┘

                                            130
   ┌──────────────────────────────────────────────┐
   │               INPUT INTERFACE                  │
   └──────────────────────────────────────────────┘

                                            140
   ┌──────────────────────────────────────────────┐
   │                  DISPLAY                        │
   └──────────────────────────────────────────────┘

                                            150
   ┌──────────────────────────────────────────────┐
   │            COMMUNICATION INTERFACE             │
   └──────────────────────────────────────────────┘
```

FIG 3

(a)

(b)

| before | after |
|---|---|
| before<br>R: 183, G: 191, B: 194 | after<br>R: 127, G: 147, B: 155 |

(c)

FIG 4

(a)

(b)

FIG 5

| 100 | 110 | 120 | 130 | 100 |
|-----|-----|-----|-----|-----|
| 100 | 110 | 120 | 130 | 140 |
| 100 | 110 | 120 | 130 | 140 |
| 100 | 110 | 120 | 130 | 140 |
| 100 | 110 | 120 | 130 | 140 |

(a)

(b)

(c)

FIG 6

FIG 7

```
                          ┌─────────────┐
                          │    START    │
                          └──────┬──────┘
                                 │
                                 ▼
┌──────────────────────────────────────────────────────┐
│   ACQUIRE PLURALITY OF SPACE IMAGES AND LABEL          │
│  CLASS SPECIFYING SPACE INFORMATION OR ACQUIRE         │ ～S710
│  PLURALITY OF SPACE IMAGES TO WHICH CLASS IS           │
│     LABELED AND GENERATE LEARNING DATA                 │
└──────────────────────────────────────────────────────┘
                                 │
                                 ▼
┌──────────────────────────────────────────────────────┐
│   GENERATE SECOND SPACE IMAGE BY CHANGING SOME         │
│   OR ALL OF PIXEL INFORMATION INCLUDED IN FIRST        │ ～S720
│     SPACE IMAGE AND AUGMENT LEARNING DATA              │
└──────────────────────────────────────────────────────┘
                                 │
                                 ▼
┌──────────────────────────────────────────────────────┐
│      LABEL CLASS LABELED TO FIRST SPACE IMAGE,         │
│              TO SECOND SPACE IMAGE                      │ ～S730
└──────────────────────────────────────────────────────┘
                                 │
                                 ▼
┌──────────────────────────────────────────────────────┐
│   LEARN WEIGHT OF MODEL DESIGNED BASED ON IMAGE        │
│ CLASSIFICATION ALGORITHM, FOR DERIVING CORRELATION     │
│ BETWEEN SPACE IMAGE AND LABELED CLASS, BY GENERATE     │ ～S740
│   AUGMENTED LEARNING DATA TO MODEL TO GENERATE         │
│   MODEL FOR DETERMINING CLASS FOR SPACE IMAGE          │
└──────────────────────────────────────────────────────┘
                                 │
                                 ▼
                          ┌─────────────┐
                          │     END     │
                          └─────────────┘
```

<table>
<tr><td colspan="2">INTERNATIONAL SEARCH REPORT</td><td colspan="2">International application No.<br>**PCT/KR2020/016688**</td></tr>
</table>

**A. CLASSIFICATION OF SUBJECT MATTER**

**G06N 20/00**(2019.01)i; **G06N 5/02**(2006.01)i; **G06T 19/00**(2011.01)i; **G06T 19/20**(2011.01)i; **G06T 5/00**(2006.01)i

According to International Patent Classification (IPC) or to both national classification and IPC

**B. FIELDS SEARCHED**

Minimum documentation searched (classification system followed by classification symbols)

G06N 20/00(2019.01); G06N 99/00(2010.01); G06T 3/40(2006.01); G06T 5/00(2006.01); G06T 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 데이터(data), 증강(augmentation), 공간(space), 분석(analysis), 모델(model), 학습(learning), 이미지(image), 픽셀(pixel), 레이블링(labeling), 상관관계(correlation), 가중치(weight), 클래스(class)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2018-169672 A (MITSUBISHI ELECTRIC INFORMATION SYSTEMS CORP.) 01 November 2018 (2018-11-01)<br>See paragraphs [0009], [0015], [0020]-[0028] and [0031]-[0047]; and figures 1-2. | 1-7,9-14<br><br>8 |
| Y | KR 10-2020-0078214 A (SAMSUNG ELECTRONICS CO., LTD.) 01 July 2020 (2020-07-01)<br>See paragraphs [0042]-[0043]; and figure 1. | 1-7,9-14 |
| A | KR 10-2018-0004824 A (VUNO INC.) 12 January 2018 (2018-01-12)<br>See paragraphs [0019]-[0079]; and figures 1-7. | 1-14 |
| A | JP 07-021367 A (OYO KEISOKU KENKYUSHO: KK) 24 January 1995 (1995-01-24)<br>See paragraphs [0058]-[0076]; and figures 11-14. | 1-14 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 April 2021** | **05 April 2021** |

| Name and mailing address of the ISA/KR | Authorized officer |
|---|---|
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| | International application No. |
|---|---|
| | **PCT/KR2020/016688** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2018-0080051 A (ELECTRONICS AND TELECOMMUNICATIONS RESEARCH INSTITUTE) 11 July 2018 (2018-07-11)<br>   See paragraphs [0091]-[0119]; and figures 1-5. | 1-14 |

Form PCT/ISA/210 (second sheet) (July 2019)

**INTERNATIONAL SEARCH REPORT**
Information on patent family members

International application No.

**PCT/KR2020/016688**

| Patent document cited in search report | | | Publication date (day/month/year) | Patent family member(s) | | | Publication date (day/month/year) |
|---|---|---|---|---|---|---|---|
| JP | 2018-169672 | A | 01 November 2018 | JP | 6441980 | B2 | 19 December 2018 |
| KR | 10-2020-0078214 | A | 01 July 2020 | WO | 2020-130747 | A1 | 25 June 2020 |
| KR | 10-2018-0004824 | A | 12 January 2018 | KR | 10-1880035 | B1 | 19 July 2018 |
| | | | | US | 2017-0256038 | A1 | 07 September 2017 |
| | | | | WO | 2017-051943 | A1 | 30 March 2017 |
| JP | 07-021367 | A | 24 January 1995 | JP | 3347817 | B2 | 20 November 2002 |
| KR | 10-2018-0080051 | A | 11 July 2018 | US | 10546209 | B2 | 28 January 2020 |
| | | | | US | 2018-0189596 | A1 | 05 July 2018 |

Form PCT/ISA/210 (patent family annex) (July 2019)